# EUROPÄISCHE PATENTSCHRIFT

(11) **EP 1 956 210 B1**
(45) Veröffentlichungstag und Bekanntmachung des Hinweises auf die Patenterteilung: **08.02.2012**
(21) Anmeldenummer: 07123500.6
(22) Anmeldetag: 18.12.2007
(51) Int. Cl.: F02B 25/04

(54) **Verfahren zum Betreiben eines längsgespülten Zweitakt-Grossdieselmotors, sowie ein längsgespülter Zweitakt-Grossdieselmotor**
Method for operating a longitudinally wound two stroke diesel engine and a longitudinally wound two-stroke diesel motor
Procédé de fonctionnement d'un grand moteur diesel deux temps lavé en longueur, ainsi que grand moteur diesel deux temps lavé en longueur

(30) Priorität: 12.02.2007 EP 07102139
(43) Veröffentlichungstag der Anmeldung: 13.08.2008
(73) Patentinhaber: Wärtsilä Schweiz AG, 8401 Winterthur (CH)
(72) Erfinder: Häni, Thomas, 8406, Winterthur (CH)
(74) Vertreter: Sulzer Management AG

(56) Entgegenhaltungen:
- EP-A1- 1 380 737
- DE-A1-102004 062 479
- US-A- 3 237 397
- US-A- 6 062 178

## Beschreibung

Die Erfindung betrifft ein Verfahren zum Betreiben eines längsgespülten Zweitakt-Grossdieselmotors, sowie einen längsgespülten Zweitakt-Grossdieselmotor gemäss dem Oberbegriff der unabhängigen Ansprüche 1 und 8.

Zur Leistungssteigerung von Hubkolbenbrennkraftmaschinen, wie zum Beispiel von Grossdieselmotoren für Schiffe oder für stationäre Anlagen zur Erzeugung elektrischer Energie, wird nach einem Verbrennungstakt die Frischluft mittels einer Aufladegruppe, die in der Regel als Abgasturbolader ausgelegt ist, unter erhöhtem Druck in den Brennraum eines Zylinders eingebracht. Dabei kann ein Teil der thermischen Energie der Abgase ausgenutzt werden, die den Brennraum des Zylinders nach dem Verbrennungstakt verlassen. Dazu werden die heissen Abgase durch Öffnen eines Auslassventils aus dem Brennraum des Zylinders der Aufladegruppe zugeführt. Die Aufladegruppe besteht im wesentlichen aus einer Turbine, die durch die unter Druck in die Aufladegruppe eintretenden heissen Abgase angetrieben wird. Die Turbine treibt ihrerseits einen Verdichter an, wodurch Frischluft angesaugt und verdichtet wird. Den Verdichter mit Turbine, eine Anordnung, die häufig auch einfach als Turbolader bezeichnet wird und insbesondere, aber nicht nur, im Fall von Zweitakt Grossdieselmotoren als Verdichter einen Radialverdichter verwendet, ist ein sogenannter Diffusor, ein Ladeluftkühler, ein Wasserabscheider und ein Einlassreceiver nachgeschaltet, von wo aus die komprimierte Frischluft, auch als Ladeluft oder Spülluft bezeichnet, schliesslich in die einzelnen Brennräume der Zylinder des Grossdieselmotors eingespeist wird. Durch den Einsatz einer solchen Aufladegruppe kann somit die Frischluftzufuhr erhöht und die Effizienz des Verbrennungsvorgangs im Brennraum des Zylinders gesteigert werden.

Im Fall von Grossdieselmotoren erfolgt, je nach Typ, die Einspeisung der Luft an unterschiedlichen Stellen am Zylinder. So wird beispielsweise bei längsgespülten Zweitakt-Motoren die Luft über Spülschlitze, die in der Lauffläche im unteren Bereich des Zylinders angeordnet sind, in den Brennraum des Zylinders eingebracht. Bei Viertakt-Motoren wird die Ladeluft in der Regel über ein oder mehrere Einlassventile, die im Zylinderdeckel angeordnet sind, in den Brennraum des Zylinders eingebracht. Dabei sind durchaus auch Zweitakt-Motoren bekannt, die an Stelle von Spülschlitzen im unteren Bereich des Zylinders mit Einlassventilen im Zylinderdeckel ausgerüstet sind.

Eine zentrale Bedeutung für die Frischluftversorgung der Zylinder kommt dabei dem oben bereits erwähnten Ladeluftkühler zu. Wie dem Fachmann wohlbekannt ist, handelt es sich bei den bekannten Ladeluftkühlern um ein im wesentlichen quaderförmiges Gehäuse, in welchem Kühlpakete untergebracht sind, die die Ladeluft vom Eingang des Ladeluftkühlers zum Ausgang des Ladeluftkühlers zur Kühlung der Ladeluft durchströmt. Die Ladeluft wird dabei massiv abgekühlt, typischerweise z.B. von 250°C auf 50°C, so dass neben der Kühlung der Luft im Ladeluftkühler auch Wasser aus der Ladeluft im Ladeluftkühler kondensiert.

Dabei entstehen beim Betrieb von Dieselbrennkraftmaschinen im allgemeinen beträchtliche Mengen von die Umwelt belastenden Stickstoffoxiden (NOₓ). Zum Schutz der Umwelt sind daher erhebliche Anstrengungen unternommen worden, Dieselmotoren mit deutlich reduzierter NOₓ-Emission zu entwickeln. Die Verminderung der NOₓ-Emission kann beispielsweise mittels selektiver katalytischer Reduktion der Stickstoffoxide realisiert werden. Insbesondere bei Grossdieselmotoren, wie sie typischerweise zum Antreiben von Schiffen verwendet werden, ist es aber häufig aus Platzgründen sehr schwierig - wenn überhaupt möglich -, entsprechend dimensionierte Katalysatorvorrichtungen vorzusehen. Daher hat man sich unter anderem auf die Entwicklung von sogenannten Primärmassnahmen konzentriert, bei welchen bereits die Entstehung der Stickstoffoxide im Brennraum des Zylinders vermindert wird.

Für längsgespülte Zweitakt-Grossdieselmotoren ist es beispielsweise bekannt, dass der Spülluft oder Frischluft ausserhalb des Zylinders Verbrennungsgase beigemischt werden (externe Abgas-Rezirkulation), um dadurch den Sauerstoffgehalt der Spülluft zu reduzieren. Dies bewirkt eine Senkung der beim Verbrennungsprozess entstehenden NOₓ-Menge. Nachteilig an dieser Lösung ist jedoch, dass entweder zumindest ein Teil der Verbrennungsgase durch den Kompressor der Aufladegruppe (Turbolader) geführt werden muss, was zu erheblichen Verschmutzungen im Kompressor und im nachgeschalteten Ladeluftkühler führt, oder eine weitere Pumpe zum Komprimieren der Verbrennungsgase vorgesehen werden muss, falls die Verbrennungsgase der Frischluft erst auf der Hochdruckseite des Kompressors zugeführt werden. Dabei ist im letzteren Fall aber ebenfalls eine nachteilige Verschmutzung des Ladeluftkühlers in Kauf zu nehmen.

In der EP-A-653 558 wird deshalb ein Verfahren zum Vermindern der Stickstoffoxidmenge im Abgas eines Zweitakt-Grossdieselmotors mit einer eine Turbine und einen Kompressor umfassenden Aufladegruppe vorgeschlagen, das als interne Abgas-Rezirkulation bezeichnet werden kann. Gemäss diesem Verfahren wird jeweils ein Teil der Verbrennungsgase, die beim Verbrennungsprozess entstehen, im Zylinder zurückbehalten. Diese zurückbehaltenen Abgase bilden beim folgenden Kompressionshub ein Gemisch mit der eingeströmten Frischluft, das dann im Vergleich zur reinen Frischluft eine verminderte Sauerstoffkonzentration aufweist, sodass beim anschliessenden Verbrennungsprozess weniger Stickstoffoxide entstehen. Es wird also bewusst eine verschlechterte bzw. reduzierte Spülung in dem Sinne realisiert, dass die Ausspülung der Verbrennungsgase aus dem Zylinder unvollständig ist und ein beträchtlicher Teil der Abgase jeweils im Zylinder zurückbleibt.

Das Zurückbehalten eines Teils der Verbrennungsgase im Zylinder wird gemäss der EP-A-653 558 durch Mittel erreicht, die ausserhalb des Zylinders vorgesehen sind. So wird vorgeschlagen, zwischen dem Austritt des Kompressors und dem Eintritt des Zylinders einen Teil der Frischluft zu entnehmen, sodass eine geringere Frischluftmenge als normalerweise üblich in den Zylinder eintritt, die weniger Verbrennungsgase als üblich beim Kompressionshub verdrängt. Alternativ wird auch vorgeschlagen, einen Teil der aus dem Zylinder austretenden Verbrennungsgase an der Turbine der Aufladegruppe vorbeizuführen, sodass eine entsprechend kleinere Frischluftmenge vom Kompressor zum Zylinder gefördert wird. Bei dieser Variante wird also die Frischluftzufuhr dadurch reduziert, dass die Leistung der den Kompressor antreibenden Turbine vermindert wird.

Insbesondere bei grossen Mengen von im Zylinder zurückbehaltenen Verbrennungsgasen kann sich die Temperatur im Zylinder dadurch stark erhöhen. Dem kann gemäss der EP-A-653 558 dadurch entgegengewirkt werden, dass zumindest während eines Teils des Kompressionshubs Wasser in das im Zylinder befindliche Frischluft/Abgasgemisch gespritzt wird.

Das ist jedoch erstens eine baulich sehr aufwendige Massnahme, da zusätzlich Einrichtungen zum Einspritzen des Wassers installiert werden müssen. Zum anderen verursacht das Wasser, insbesondre durch chemische Reaktionen des Wassers mit den bei der Verbrennung entstehenden Verbrennungsgasen, wie zum Beispiel durch die Bildung von aggressiven Säuren, im Zylinder neue Probleme, wie zum Beispiel Korrosion, insbesondere Heissgaskorrosion an Kolbenoberflächen, Kolbenringen, an den Zylinderwänden, den Auslassventilen und so weiter.

Die EP 0 967 371 B1 schlägt daher vor, die Spülluftschlitze zu verkleinern um so den Frischluftstrom in den Zylinder zu reduzieren, was zu einer deutlichen Reduktion des NOₓ Anteils in den Verbrennungsgasen, also in den Abgasen führt.

Das führt jedoch ebenfalls zu einer gewissen Erhöhung der Verbrennungstemperatur, so dass auch bei dieser Lösung zusätzlich Wasser in den Verbrennungsraum eingespritzt werden muss, das ansonsten eine grösseren thermische Belastung des Motors und seiner Komponenten zu befürchten ist, was wiederum zu kürzeren Wartungsintervallen, einer höheren Ausfallwahrscheinlichkeit im Betrieb und letztlich in erhöhten Betriebskosten resultiert.

Die EP 1 380 737 schlägt dabei einen Grossdieselmotor vor, der ein Druckerhöhungsmittel zur Erhöhung des Ladeluftdrucks aufweist. Die US 6 062 178 zeigt ein Druckerhöhungsmittel, welches einen Einströmquerschnitt an der Turbinenseite des Abgasturboladers verkleinert. Bei der DE 10 2004 062 479 wird das Auslassventil derart angesteuert, dass eine bestimmte Menge an Abgasen im Zylinder verbleibt. Ein weitere bekannter Grossdieselmotor ist z.B. in der auch in der US 3 237 397 beschrieben.

Ausgehend vom Stand der Technik, ist es daher eine Aufgabe der Erfindung, ein verbessertes Verfahren und einen verbesserten längsgespülten Zweitakt-Grossdieselmotor bereitzustellen, bei der eine Verminderung der Emission von Stickstoffoxiden erreicht wird, ohne die thermische Belastung des Motors zu erhöhen und ohne wesentliche bauliche Veränderungen, so dass auch bestehende Motoren mit dem erfindungsgemässen Verfahren betrieben werden können, bzw. durch einfache Massnahmen umgerüstet werden können, ohne dass der Wirkungsgrad beeinträchtigt wird, d.h., ohne dass ein erhöhter Treibstoffverbrauch und / oder eine Leistungsverminderung in Kauf genommen werden muss.

Die diese Aufgaben lösenden Gegenstände der Erfindung sind durch die Merkmale der unabhängigen Ansprüche 1 und 8 gekennzeichnet.

Die abhängigen Ansprüche beziehen sich auf besonders vorteilhafte Ausführungsformen der Erfindung.

Die Erfindung betrifft somit ein Verfahren zum Betreiben eines längsgespülten Zweitakt-Grossdieselmotors, wobei an einem Einlassbereich eines Zylinders zur Zuführung einer vorgegebenen Spülluftmenge Spülschlitze vorgesehen werden und an einem Zylinderdeckel des Zylinders zum Ausstoss eines Verbrennungsgases ein Auslassventil vorgesehen wird. Bei dem Verfahren der vorliegenden Erfindung wird eine unter einem Umgebungsdruck bereitstehende Frischluft von einem Abgasturbolader angesaugt und dem Zylinder als Spülluft unter einem vorgegebenen Ladeluftdruck über die Spülschlitze zugeführt, so dass im Zylinder ein Zündgasgemisch aus der Spülluft und dem Verbrennungsgas hergestellt wird. Dabei wird ein Druckerhöhungsmittel zur Erhöhung des Ladeluftdrucks vorgesehen, und dem Zylinder wird unter einem erhöhten Ladeluftdruck ein reduziertes Spülluftvolumen zugeführt. Erfindungsgemäss wird ein Regulierungsmittel vorgesehen, so dass eine Durchflussrate eines Kühlmittels durch einen Ladeluftkühler (14) derart gessteuert- und / oder geregelt wird, dass durch das Druckerhöhungsmittel (12, 121) eine mittlere Zündtemperatur des Zündgasgemischs im wesentlichen nicht verändert wird.

Wie eingangs detailliert beschrieben, musste bei den aus dem Stand der Technik bekannten Verfahren die Reduktion der NOₓ-Belastung in den Abgasen immer mit einer erhöhten Wärmebelastung des Motors erkauft werden, weil die NOₓ-Reduktion dadurch erreicht wurde, dass die bei der Verbrennung im Zylinder zur Verfügung stehende Menge an Sauerstoff reduziert wurde, z.B. indem die Menge an zugeführter Spülluftzufuhr reduziert wurde. Was wiederum den enormen Nachteil hat, dass die entsprechende Menge Spülluft zur Kühlung im Zylinder eben nicht mehr zur Verfügung steht. Daher mussten aufwendige Massnahmen ergriffen werden, wie die Einspritzung von Wasser in den Zylinder, um den Verlust an Kühlwirkung durch die fehlende Spülluft zu kompensieren.

Diese Problematik wird erstmals durch die vorliegende Erfindung gelöst, und zwar ohne das aufwendige bauliche Veränderungen am Motor notwendig sind, und ohne den Einsatz von Massnahmen, wie zum Beispiel die Einspritzung von Wasser in den Zylinder, die ihrerseits wieder negativ auf den Motor und dessen Betrieb zurückwirken.

Das wird durch die vorliegende Erfindung dadurch erreicht, dass das durch die Spülschlitze in den Zylinder eingebrachte Spülluftvolumen reduziert wird, so dass im Spültakt die Menge an durch das Auslassventil ausgestossenen Abgasen reduziert wird. Dadurch verbleibt im Verbrennungstakt im Zylinder mehr Restabgas als bei den aus dem Stand der Technik bekannten Methoden, was dazu führt, dass die Bildung von NOₓ reduziert wird, weil der Volumenanteil an eingeschlossener Luft im Vergleich zum Stand der Technik verkleinert ist.

Die Reduktion des Spülluftvolumens wird dabei dadurch erreicht, dass die Spülluft unter einem im Vergleich zum Stand der Technik erhöhten Druck über die Spülschlitze in den Zylinder eingebracht wird. Dadurch, dass die Spülluft unter einem erhöhten Ladeluftdruck in den Zylinder gepresst wird, wird einerseits die Dichte der einzubringenden Kühlluft reduziert und andererseits die Vermischung der Spülluft mit den im Zylinder verbleibenden Abgasen verbessert. Durch geeignete Prozessführung kann dann z.B. erreicht werden, dass ein kleineres Spülluftvolumen in den Zylinder eingebracht wird. Dadurch wird das Volumenverhältnis von zurückgehaltenen Abgasen zu frischer Spülluft erhöht, was die Verbrennung verschlechtert, auch weil zusätzlich die Frischluft stärker mit den Abgasen vermischt ist, so dass der NOₓ-Anteil in den Verbrennungsprodukten, also in den Abgasen reduziert wird.

Andererseits kann das Verhältnis von Ladeluftdruckerhöhung zu Reduktion des eingebrachten Volumens an Frischluft so eingestellt werden, dass die eingebrachte Menge an Spülluft, also z.B. deren Masse insgesamt im wesentlichen gleich bleibt, also nicht reduziert wird, so dass das Wärmeaufnahmevermögen der eingebrachten Frischluft, also deren Wärmekapazität, im wesentlichen nicht reduziert wird.

Das heisst, obwohl bei dem erfindungsgemässen Verfahren weniger Volumen an Spülluft in den Zylinder eingebracht wird, weil es unter einem erhöhten Druck steht, wird dennoch die eingebrachte Masse an Spülluft im wesentlichen nicht reduziert, weil die Massendichte der Frischluft unter dem erhöhten Druck entsprechend grösser ist.

Somit wird durch den Einsatz des erfindungsgemässen Verfahrens die Bildung von NOₓ massiv reduziert, weil der Volumenanteil von zurückgehaltenem Abgas im Vergleich zum Volumen neu zugeführter Frischluft erhöht wird. Andererseits bleibt das Wärmeaufnahmevermögen der in den Zylinder eingebrachten Spülluft erhalten, weil im wesentlichen die gleiche Masse an Frischluft in den Zylinder eingebracht wird, wie ohne Einsatz des erfindungsgemässen Verfahrens.

Um den erhöhten Ladeluftdruck zu erreichen, wird wie bereits erwähnt, ein Druckerhöhungsmittel verwendet, das bei einem für die Praxis besonders wichtigen Fall im Speziellen durch einen Düsenring oder eine Blende realisiert sein kann, die vor dem Einlass des Verdichters des Abgasturboladers vorgesehen wird, so dass ein Einströmquerschnitt an einer Turbinenseite des Abgasturboladers derart verkleinert wird, dass eine Geschwindigkeit des in den Abgasturbolader einströmenden Verbrennungsgases erhöht wird. Dadurch, dass die Verbrennungsgase mit erhöhter Geschwindigkeit in den Abgasturbolader einströmen, wird die Drehzahl der Turbine erhöht, was zur Folge hat, dass das Verdichterlaufrad, das drehfest mit dem Turbinenlaufrad des Abgasturboladers gekoppelt ist, ebenfalls auf eine höhere Drehzahl gebracht wird, so dass der Abgasturbolader die angesaugte Frischluft unter einem erhöhten Druck, z.B. unter absolut 3.5 bar, im speziellen 4 bar bis 4.5 bar, insbesondere mit bis zu 5bar oder einem noch höheren Absolutdruck in den Zylinder pumpt. Die Druckdifferenz zum Umgebungsdruck, unter der die angesaugte Frischluft steht, ist dabei in Bezug auf die zuvor genannten Werte jeweils gerade um die Höhe des Umgebungsdrucks kleiner.

Das Einbringen der Spülluft unter einem erhöhten Ladeluftdruck hat dabei während des Spültaktes, also während die Spülluft in den Zylinder durch die Spülschlitze eingebracht wird und das Auslassventil noch offen ist, zusätzlich, ganz automatisch noch eine positive Rückwirkung auf den Abgasturbolader selbst: Da die Spülluft unter erhöhtem Druck bei noch geöffnetem Auslassventil in den Zylinder eingebracht wird, treten während des Spültaktes die mit Spülluft vermischten Gase auch unter einem etwas höheren Druck aus dem Auslassventil aus und treiben somit wiederum den Abgasturbolader mit einem höheren Druck an, so dass dadurch wiederum die Leistung des Turboladers solange erhöht wird, bis sich ein stationärer Zustand einstellt und der Abgasturbolader einen entsprechend erhöhten mittleren Ladedruck liefert.

Die zusätzlich gewonnene Energie wird natürlich unter anderem dadurch erhalten, dass die schliesslich über ein Auspuffsystem in die Atmosphäre abgegeben Abgase eine kleinere Wärmeenergie haben, als ohne Anwendung des erfindungsgemässen Verfahrens, d.h. durch das erfindungsgemässe Verfahren wird unter anderem die thermische Energie der Abgase besser ausgenutzt.

Es versteht sich von selbst, dass das Druckerhöhungsmittel jedes geeignete Druckerhöhungsmittel sein kann. So kann in ganz speziellen Fällen z.B. anstatt des Einbaus einer Blende oder eines Düsenrings in den Einlass der Turbine des Abgasturboladers, was eine besonders einfache und kostengünstige Lösung ist, auch ein Abgasturbolader mit erhöhter Pumpleistung nachgerüstet werden, mit welchem der erhöhte Ladeluftdruck erzeugt wird. Für ganz besonders gelagerte Fälle ist es sogar möglich, einen weiteren Abgasturbolader oder eine andere zusätzlich Pumpe im Abgas- oder Spülluftsystem vorzusehen. Dabei können an einem bestehenden Abgasturbolader alternativ oder zusätzlich weitere, dem Fachmann an sich bekannte Massnahmen zur Ladeluftdruckerhöhung vorgenommen werden, wie zum Beispiel eine Verkleinerung des Turbinengehäuses in dem die Turbine des Abgasturboladers angeordnet ist oder jede andere geeignete Massnahme zur Leistungssteigerung des Abgasturboladers.

In Fällen, in denen es durch den erhöhten Ladeluftdruck durch eine zu starke Erwärmung aufgrund der stärkeren Kompression der Spülluft kommt, kann es vorteilhaft sein, dass die Ladeluft durch verschiedene Massnahmen zusätzlich gekühlt wird.

So kann z.B. das Auslassventil derart angesteuert werden, dass, wie erwähnt, eine vorgegebene Abgasmenge des Verbrennungsgases nach einem Schliessen des Auslassventils im Zylinder verbleibt und / oder ein vorgegebener Zünddruck und / oder Kompressionsdruck eingestellt wird, insbesondere auf einen kleineren Wert eingestellt wird, so dass im Vergleich zum Stand der Technik der maximal im Zylinder erreichte Zünddruck, also z.B. der Kompressionsdruck im Zylinder in der Nähe des oberen Umkehrpunkts, der gewöhnlich mit OT bezeichnet wird, etwas kleiner gewählt wird. Dadurch wird das im Zylinder eingeschlossene Gemisch aus Spülluft und Abgasen etwas weniger stark komprimiert, so dass durch die Kompression die Temperatur weniger stark erhöht wird. Das kann zum Beispiel dadurch erreicht werden, dass das Auslassventil etwas später geschlossen wird, so dass etwas mehr Gemisch aus Abgasen und Spülluft aus dem Zylinder entweichen kann, bevor das Auslassventil schliesst und der eigentliche Kompressionsvorgang im Zylinder beginnt. Dadurch kann z.B. eine durch die Kompression der Spülluft durch den Turbolader verursachte höhere Temperatur der in den Zylinder eingebrachten Spülluft wieder kompensiert werden, so dass die thermische Belastung des Motors nicht erhöht wird. Das heisst insbesondere, dass trotz dem erfindungsgemässen Einsatz des Druckerhöhungsmittels eine mittlere Zündtemperatur des Zündgasgemischs im wesentlichen nicht verändert wird.

Ein weiterer positiver Nebeneffekt ist dabei, dass, da ein nicht so hoher maximaler Kompressionsdruck erreicht wird, auch die Kompressionsarbeit, die der Kolben beim Kompressionstakt leisten muss, entsprechend verringert wird, was sich positiv auf den Treibstoffverbrauch auswirkt.

Letztlich nutzt das erfindungsgemässe Verfahren eine geschickte Kombination von thermodynamischen Prozessen in den verschiedenen Maschinenteilen, während des Kompressionstakts im Zylinder, bei der Kompression im Abgaslader, bei der Kühlung im Ladeluftkühler usw. aus, was letztlich insgesamt zu den beschriebenen positiven Effekten beim Betrieb eines erfindungsgemässen Grossdieselmotors durch Verwendung des erfindungsgemässen Verfahrens führt.

Besonders bevorzugt wird dabei der Ladeluftdruck und das Spülluftvolumen derart vorgegeben, dass die vorgegebene Spülluftmenge, insbesondere eine Masse der vorgegebenen Spülluftmenge, durch das Druckerhöhungsmittel im wesentlichen nicht verändert wird, so dass das Wärmeaufnahmevermögen insgesamt, also z.B. die Wärmekapazität der in den Zylinder eingebrachten Spülluft insgesamt im wesentlichen gleich bleibt, wodurch eine höhere thermische Belastung vermieden wird.

Erfindungsgemäss wird eine Durchflussrate eines Kühlmittels durch einen Ladeluftkühler derart gesteuert und / oder geregelt, z.B. mittels einer Pumpe, die eine Erhöhung der Durchflussrate des Kühlmittels erzeugt, dass durch das Druckerhöhungsmittel eine mittlere Zündtemperatur des Zündgasgemischs im wesentlichen nicht verändert wird und / oder es kann ein Ladeluftkühler verwendet werden, der zum Beispiel eine höhere Kühlleistung hat, so dass durch das Druckerhöhungsmittel eine mittlere Zündtemperatur des Zündgasgemischs im wesentlichen nicht verändert wird.

Dabei dient das erfindungsgemässe Verfahren, wie oben ausführlich beschrieben, hauptsächlich dazu, einen Schadstoff im Verbrennungsgas zu reduzieren, insbesondere um eine NOₓ Belastung im Verbrennungsgas zu reduzieren.

Die Erfindung betrifft weiterhin einen längsgespülten Zweitakt-Grossdieselmotor zur Durchführung des erfindungsgemässen Verfahrens, wobei an einem Einlassbereich eines Zylinders zur Zuführung einer vorgebbaren Spülluftmenge Spülschlitze vorgesehen sind und an einem Zylinderdeckel des Zylinders zum Ausstoss eines Verbrennungsgases ein Auslassventil vorgesehen ist, so dass eine unter einem Umgebungsdruck bereitstehende Frischluft von einem Abgasturbolader ansaugbar ist und dem Zylinder als Spülluft unter einem vorgebbaren Ladeluftdruck über die Spülschlitze zuführbar ist, so dass im Zylinder ein Zündgasgemisch aus der Spülluft und dem Verbrennungsgas herstellbar ist. Dabei ist ein Druckerhöhungsmittel zur Erhöhung des Ladeluftdrucks vorgesehen, so dass dem Zylinder unter einem erhöhten Ladeluftdruck ein reduziertes Spülluftvolumen zuführbar ist. Erfindungsgemäss ist ein Regulierungsmittel vorgesehen, so dass eine Durchflussrate eines Kühlmittels durch einen Ladeluftkühler (14) derart steuer- und / oder regelbar ist, dass durch das Druckerhöhungsmittel (12, 121) eine mittlere Zündtemperatur des Zündgasgemischs im wesentlichen nicht verändert ist.

Bevorzugt, aber nicht notwendig ist das Druckerhöhungsmittel ein Düsenring oder eine Blende, durch die ein Einströmquerschnitt an einer Turbinenseite des Abgasturboladers derart verkleinert ist, dass eine Geschwindigkeit des in den Abgasturbolader einströmenden Verbrennungsgases erhöht ist, wodurch ein erhöhter Ladeluftdruck im Zylinder erreichbar ist.

Bei einem anderen Ausführungsbeispiel kann das Druckerhöhungsmittel ein Abgasturbolader mit erhöhter Leistung sein, welcher im Betriebszustand den erhöhten Ladeluftdruck zur Durchführung des erfindungsgemässen Verfahrens erzeugt.

Um die Kühlung der Spülluft zu verbessern, so dass eine erhöhte thermische Belastung des Motors im Betriebszustand vermeidbar ist, kann ein Regulierungsmittel vorgesehen werden, zum Beispiel in Form einer Pumpe, so dass eine Durchflussrate eines Kühlmittels durch einen Ladeluftkühler derart steuer- und / oder regelbar ist, so dass durch das Druckerhöhungsmittel eine mittlere Zündtemperatur des Zündgasgemischs im wesentlichen nicht verändert ist.

Dabei ist es auch möglich einen anderen Ladeluftkühler vorzusehen, der derart ausgestaltet ist, d.h. eine solche Kühlleistung erbringt, dass durch das Druckerhöhungsmittel eine mittlere Zündtemperatur des Zündgasgemischs im wesentlichen nicht verändert ist.

Ein erfindungsgemässer Zweitakt-Grossdieselmotor kann in der Praxis bevorzugt ein gemäss der vorliegenden Erfindung umgerüsteter elektronisch gesteuerter Motor, insbesondere ein Wärtsilä RT-Flex Motor oder ein MAN B&W ME Motor, so dass der Öffnungswinkel und / oder Schliesswinkel des Auslassventils und / oder ein Einspritzzeitpunkt und / oder eine Einspritzdauer unabhängig elektronisch einstellbar ist und bevorzugt hydraulisch betätigbar ist.

Die Erfindung wird im Folgenden an Hand der schematischen Zeichnung näher erläutert. Es zeigen:

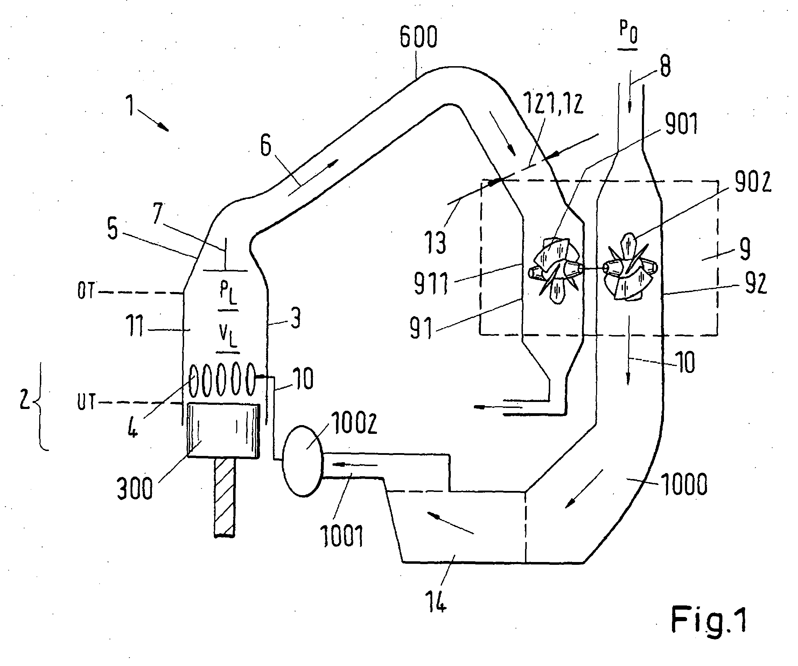

- Fig. 1: Schematisch den prinzipiellen Aufbau eines erfindungsgemässen längsgespülten Zweitakt-Grossdieselmotors mit Abgasturbolader System;

Fig. 1 zeigt in einer schematischen Darstellung zur Erläuterung des Zusammenwirkens der unterschiedlichen Komponenten den prinzipiellen Aufbau eines Abgasturbolader Systems eines erfindungsgemässen Grossdieselmotors, der als Zweitakt-Grossdieselmotor mit Längsspülung ausgebildet ist und der im folgenden gesamthaft mit dem Bezugszeichen 1 bezeichnet wird.

Der Grossdieselmotor 1 umfasst in an sich bekannter Weise üblicherweise mehrere Zylinder 3 mit einem in einem Zylinderdeckel 5 angeordneten Auslassventil 7, in welchem Zylinder 3 ein Kolben 300 zwischen einem unteren Totpunkt UT und einem oberen Totpunkt OT entlang einer Lauffläche hin- und herbewegbar angeordnet ist. Die Zylinderwände des Zylinders 3 mit Zylinderdeckel 5 und der Kolben 300 begrenzen in bekannter Weise einen Brennraum des Zylinders 3. In einem Einlassbereich 2 des Zylinders 3 sind mehrere Spülluftöffnungen 4 vorgesehen, die als Spülschlitze 4 ausgeführt sind. Je nach Stellung des Kolbens 300 werden die Spülschlitze 4 von diesem überdeckt oder freigegeben. Durch die Spülluftöffnungen 4 kann die auch als Ladeluft 10 bezeichnete Spülluft 10 in den Brennraum des Zylinders 3 einströmen. Durch das im Zylinderdeckel 5 angeordnete Auslassventil 7 strömen die bei der Verbrennung entstandenen Verbrennungsgase 6 durch eine Abgasleitung 600, die sich an das Auslassventil 7 anschliesst, in einen Abgasturbolader 9.

Der Abgasturbolader 9 umfasst als wesentliche Komponenten in an sich bekannter Weise einen Verdichter mit Verdichterlaufrad 902 zum Verdichten von Frischluft 8, sowie eine Turbine mit einem Turbinenlaufrad 901 zum Antreiben des Verdichterlaufrads 902, das durch eine Welle drehfest mit dem Turbinenlaufrad 901 verbunden ist. Die Turbine und der Verdichter sind in einem Gehäuse angeordnet und bilden den Abgasturbolader 9, der im vorliegenden Fall verdichterseitig als Radialverdichter ausgebildet ist. Die Turbine wird durch die einströmenden heissen Verbrennungsgase 6 aus dem Brennraum des Zylinders 3 angetrieben.

Zum Beladen des Brennraums des Zylinders 3 mit Spülluft 10 wird durch das Verdichterlaufrad 902 über einen Ansaugstutzen Frischluft 8 angesaugt und im Abgasturbolader 9 auf einen erhöhten Druck komprimiert, der etwas höher ist, als der letztlich im Zylinder 3 aufgebaute Ladeluftdruck P_{L}. Aus dem Abgasturbolader 9 gelangt die komprimierte Frischluft 8 als Spülluft 10 durch den nachgeschalteten Diffusor 1000 und den Ladeluftkühler 14 über den Wasserabscheider 1001 in einen Einlassreceiver 1002, der bevorzugt als Receiverraum 1002 ausgebildet ist und von dem aus die komprimierte Ladeluft 10 schliesslich als Spülluft 10 durch die Spülschlitze 4 unter dem erhöhtem Ladeluftdruck P_{L} in den Brennraum des Zylinders 3 gelangt.

Bei dem speziellen Ausführungsbeispiel der Fig. 1 ist am Abgasturbolader 9 an dessen Turbinenseite 91 ein Einströmquerschnitt durch einen Düsenring 121 verkleinert, so dass die Verbrennungsgase 6 mit erhöhter Strömungsgeschwindigkeit das Turbinenlaufrad 901 antreiben, wodurch an der Verdichterseite 92 das Verdichterlaufrad 902 ebenso wie das Turbinenlaufrad 901 auf eine höhere Drehgeschwindigkeit angetrieben wird, so dass der Abgasturbolader 9 die Spülluft 10 unter einem erhöhten Ladeluftdruck P_{L} in den Zylinder 3 pumpt. Im Beispiel der Fig. 1 ist noch ein Ladeluftkühler 14 mit einer höheren Kühlleistung installiert, so dass eine zusätzliche Temperaturerhöhung aufgrund des höheren Ladedrucks kompensiert wird.

Der Grossdieselmotor 1 ist dabei ein elektronisch gesteuerter Motor, so dass unter anderem der Öffnungswinkel und / oder der Schliesswinkel des Auslassventils 7 derart betätigbar ist, dass im Betriebszustand dem Zylinder 3 insgesamt ein kleineres Spülluftvolumen V_{L} zur Verfügung gestellt wird, jedoch die Masse an Spülluft 10 in Bezug auf einen aus dem Stand der Technik bekannten Motor im wesentlichen unverändert bleibt, da erfindungsgemäss das Druckerhöhungsmittel 12, 121 vorgesehen ist, so dass die Spülluft unter erhöhtem Druck, d.h. mit grösserer Dicht in den Zylinder 3 gepumpt wird.

Es versteht sich, dass alle in dieser Anmeldung beschriebenen erfindungsgemässen Ausführungsbeispiele lediglich exemplarisch zu verstehen sind und insbesondere alle Ausführungsvarianten, wie sie im Rahmen der vorliegenden Anmeldung beschrieben bzw. nahegelegt sind, entweder allein oder in allen geeigneten Kombinationen in speziellen Ausführungsbeispielen erfindungsgemässer Ausführungen vorgesehen sein können, so dass auch alle geeigneten Kombinationen der in dieser Anmeldung beschriebenen Ausführungsvarianten durch die vorliegenden Erfindung erfasst und abgedeckt sind.

## Patentansprüche

1. Verfahren zum Betreiben eines längsgespülten Zweitakt-Grossdieselmotors (1), wobei an einem Einlassbereich (2) eines Zylinders (3) zur Zuführung einer vorgegebenen Spülluftmenge Spülschlitze (4) vorgesehen werden und an einem Zylinderdeckel (5) des Zylinders (3) zum Ausstoss eines Verbrennungsgases (6) ein Auslassventil (7) vorgesehen wird, bei welchem Verfahren eine unter einem Umgebungsdruck (P₀) bereitstehende Frischluft (8) von einem Abgasturbolader (9) angesaugt wird und dem Zylinder (3) als Spülluft (10) unter einem vorgegebenen Ladeluftdruck (P_{L}) über die Spülschlitze (4) zugeführt wird, so dass im Zylinder (3) ein Zündgasgemisch (11) aus der Spülluft (10) und dem Verbrennungsgas (6) hergestellt wird, wobei ein Druckerhöhungsmittel (12, 121) zur Erhöhung des Ladeluftdrucks (P_{L}) vorgesehen wird, und dem Zylinder (3) unter einem erhöhten Ladeluftdruck (P_{L}) ein reduziertes Spülluftvolumen (V_{L}) zugeführt wird, **dadurch gekennzeichnet, dass** ein Regulierungsmittel vorgesehen wird, so dass eine Durchflussrate eines Kühlmittels durch einen Ladeluftkühler (14) derart gessteuert- und / oder geregelt wird, dass durch das Druckerhöhungsmittel (12, 121) eine mittlere Zündtemperatur des Zündgasgemischs im wesentlichen nicht verändert wird.

2. Verfahren nach Anspruch 1, wobei durch das Druckerhöhungsmittel (12, 121), im Speziellen durch einen Düsenring (121), ein Einströmquerschnitt (13) an einer Turbinenseite (91) des Abgasturboladers (9) derart verkleinert wird, dass eine Geschwindigkeit des in den Abgasturbolader (9) einströmenden Verbrennungsgases (6) erhöht wird und / oder ein Innenraum eines Turbinengehäuse (911) auf der Turbinenseite (91) des Abgasturboladers (9) verkleinert wird.

3. Verfahren nach einem der Ansprüche 1 oder 2, wobei das Druckerhöhungsmittel (12) ein Abgasturbolader ist, mit welchem der erhöhte Ladeluftdruck (P_{L}) erzeugt wird.

4. Verfahren nach einem der vorangehenden Ansprüche, wobei das Auslassventil (7) derart angesteuert wird, dass eine vorgegebene Abgasmenge des Verbrennungsgases (6) nach einem Schliessen des Auslassventils (7) im Zylinder (3) verbleibt und / oder ein vorgegebener Zünddruck und / oder Kompressionsdruck eingestellt wird.

5. Verfahren nach einem der vorangehenden Ansprüche, wobei der Ladeluftdruck (P_{L}) und das Spülluftvolumen (V_{L}) derart vorgegeben werden, dass die vorgegebene Spülluftmenge, insbesondere eine Masse der vorgegebenen Spülluftmenge, durch das Druckerhöhungsmittel (12, 121) im wesentlichen nicht verändert wird.

6. Verfahren nach einem der vorangehenden Ansprüche, wobei das Auslassventil (7) derart angesteuert wird, dass durch das Druckerhöhungsmittel (12, 121) eine mittlere Zündtemperatur des Zündgasgemischs im wesentlichen nicht verändert wird.

7. Verfahren nach einem der vorangehenden Ansprüche, bei welchem ein Schadstoff im Verbrennungsgas (6) reduziert wird, insbesondere eine NOₓ Belastung reduziert wird.

8. Längsgespülter Zweitakt-Grossdieselmotor, wobei an einem Einlassbereich (2) eines Zylinders (3) zur Zuführung einer vorgebbaren Spülluftmenge Spülschlitze (4) vorgesehen sind und an einem Zylinderdeckel (5) des Zylinders (3) zum Ausstoss eines Verbrennungsgases (6) ein Auslassventil (7) vorgesehen ist, so dass eine unter einem Umgebungsdruck (P₀) bereitstehende Frischluft (8) von einem Abgasturbolader (9) ansaugbar ist und dem Zylinder (3) als Spülluft (10) unter einem vorgebbaren Ladeluftdruck (P_{L}) über die Spülschlitze (4) zuführbar ist, so dass im Zylinder (3) ein Zündgasgemisch aus der Spülluft (10) und dem Verbrennungsgas (6) herstellbar ist, wobei ein Druckerhöhungsmittel (12, 121) zur Erhöhung des Ladeluftdrucks (P_{L}) vorgesehen ist, so dass dem Zylinder (3) unter einem erhöhten Ladeluftdruck (P_{L}) ein reduziertes Spülluftvolumen (V_{L}) zuführbar ist, **dadurch gekennzeichnet, dass** ein Regulierungsmittel vorgesehen ist, so dass eine Durchflussrate eines Kühlmittels durch einen Ladeluftkühler (14) derart steuer- und / oder regelbar ist, dass durch das Druckerhöhungsmittel (12, 121) eine mittlere Zündtemperatur des Zündgasgemischs im wesentlichen nicht verändert ist.

9. Zweitakt-Grossdieselmotor nach Anspruch 8, wobei das Druckerhöhungsmittel (12, 121) einen Düsenring (121) ist, durch die ein Einströmquerschnitt (13) an einer Turbinenseite (91) des Abgasturboladers (9) derart verkleinert ist, dass eine Geschwindigkeit des in den Abgasturbolader (9) einströmenden Verbrennungsgases (6) erhöht ist und / oder ein Innenraum eines Turbinengehäuse (911) auf der Turbinenseite (91) des Abgasturboladers (9) verkleinert ist.

10. Zweitakt-Grossdieselmotor nach einem der Ansprüche 8 oder 9, wobei das Druckerhöhungsmittel (12, 121) ein Abgasturbolader (9) ist, welcher im Betriebszustand den erhöhten Ladeluftdruck (P_{L}) erzeugt.

11. Zweitakt-Grossdieselmotor nach einem der Ansprüche 8 bis 10 wobei der Zweitakt-Grossdieselmotor ein elektronisch gesteuerter Motor, insbesondere ein Wärtsilä RT-Flex Motor oder ein MAN B&W ME Motor ist, so dass der Öffnungswinkel und / oder Schliesswinkel des Auslassventils (7) und / oder ein Einspritzzeitpunkt und / oder eine Einspritzdauer unabhängig elektronisch einstellbar ist und bevorzugt hydraulisch betätigbar ist.

## Claims

1. A method for the operation of a longitudinally scavenged two-stroke large diesel engine (1), wherein scavenging slots (4) are provided at an inlet region (2) of a cylinder (3) for the supply of a predetermined amount of scavenging air and an outlet valve (7) is provided at a cylinder cover (5) of the cylinder (3) for the expulsion of a combustion gas (6), wherein, in said method, fresh air (8) available at an environmental pressure (P₀) is sucked in by an exhaust gas turbocharger (9) and is supplied to the cylinder (3) as scavenging air (10) at a predetermined charge air pressure (P_{L}) via the scavenging slots (4), so that an ignition gas mixture (11) is generated in the cylinder (3) from the scavenging air (10) and the combustion gas (6), wherein a pressure increasing means (12, 121) for the increase of the charge air pressure (P_{L}) is provided and a reduced volume of scavenging air (V_{L}) is supplied to the cylinder (3) at a raised charge air pressure (P_{L}), **characterized in that** a regulating means is provided so that a flow rate of a cooling medium is controlled and/or regulated by a charge air cooler (14) in such a way that a mean ignition temperature of the ignition gas mixture is not substantially altered by the pressure increasing means (12, 121).

2. A method in accordance with claim 1, wherein an inflow cross-section (13) at a turbine side (91) of the exhaust gas turbocharger (9) is made smaller by the pressure increasing means (12, 121), especially by a nozzle ring (121), to such an extent that a speed of the combustion gas (6) flowing into the exhaust gas turbocharger (9) is increased and/ or an internal space of a turbine housing (911) at the turbine side (91) of the exhaust gas turbocharger (9) is reduced.

3. A method in accordance with one of the claims 1 or 2, wherein the pressure increasing means (12) is an exhaust gas turbocharger with which the raised charge air pressure (P_{L}) is produced.

4. A method in accordance with any one of the previous claims, wherein the outlet valve (7) is controlled in such a way that a predetermined quantity of exhaust gas of the combustion gas (6) remains in the cylinder (3) after a closing of the outlet valve (7) and/or a predetermined ignition pressure and/or compression pressure is set.

5. A method in accordance with any one of the previous claims, wherein the charge air pressure (P_{L}) and the scavenging air volume (V_{L}) is predetermined in such a way that the predetermined quantity of scavenging air, in particular a mass of the pre-determined amount of scavenging air, is not substantially altered by the pressure increasing means (12, 121).

6. A method in accordance with any one of the previous claims, wherein the outlet valve (7) is controlled in such a way that a mean ignition temperature of the ignition gas mixture is not substantially altered by the pressure increasing means (12, 121).

7. A method in accordance with any one of the previous claims, in which a noxious substance in the combustion gas (6) is reduced, in particular a NOₓ burden is reduced.

8. A longitudinally scavenged two-stroke large diesel engine, wherein scavenging slots (4) are provided at an inlet region (2) of a cylinder (3) for the supply of a predetermined quantity of scavenging air and an outlet valve (7) is provided at a cylinder cover (5) of the cylinder (3) for the expulsion of a combustion gas (6), so that fresh air (8) available at an environmental pressure (P₀) can be sucked in by an exhaust gas turbocharger and can be supplied to the cylinder (3) as scavenging air (10) at a predetermined charge air pressure (P_{L}) via the scavenging slots (4), so that an ignition gas mixture can be generated in the cylinder (3) from the scavenging air (10) and the combustion gas (6), wherein a pressure increasing means (12, 121) is provided to increase the charge air pressure (P_{L}) so that a reduced volume of scavenging air (V_{L}) can be supplied to the cylinder at a raised charge air pressure (P_{L}), **characterized in that** a regulation means is provided so that a flow rate of a cooling medium through a charge air cooler (14) can be controlled and/or regulated in such a way that a mean ignition temperature of the ignition gas mixture is not substantially changed by the pressure increasing means.

9. A two-stroke large diesel engine in accordance with claim 8, wherein the pressure increasing means (12, 121) is a nozzle ring (121) through which an inflow cross-section (13) at a turbine side (91) of the exhaust gas turbocharger (9) is reduced to such an extent that a speed of the combustion gas (6) flowing into the exhaust gas turbocharger (9) is increased and/or an internal space of a turbine housing (911) at the turbine side (91) of the exhaust gas turbo charger (9) is reduced.

10. A two-stroke large diesel engine in accordance with one of the claims 8 or 9, wherein the pressure increasing means (12, 121) is an exhaust gas turbocharger (9) which produces the increased charge air pressure (P_{L}) in the operating state.

11. A two-stroke large diesel engine in accordance with any one of the claims 8 to 10, wherein the two-stroke large diesel engine is an electronically controlled engine, in particular a Wärtsilä RT-Flex engine or a MAN B&W ME engine, so that the opening angle and/or the closing angle of the outlet valve (7) and/or an injection time point and/or an injection duration is independently electronically adjustable and can preferably be operated hydraulically.

## Revendications

1. Procédé pour faire fonctionner un gros moteur diesel deux temps (1) balayé dans la longueur, des fentes de balayage (4) étant prévues sur une zone d'entrée (2) d'un cylindre (3) pour l'arrivée d'une quantité d'air de balayage prédéfinie et une soupape de sortie (7) étant prévue sur un couvercle de cylindre (5) du cylindre (3) pour l'éjection d'un gaz de combustion (6), procédé dans lequel un air frais (8) mis à disposition sous une pression ambiante (P₀) étant aspiré par un turbocompresseur à gaz d'échappement (9) et étant amené au cylindre (3) comme air de balayage (10) sous une pression d'air de suralimentation (P_{L}) prédéfinie par les fentes de balayage (4), de sorte qu'un mélange gazeux d'allumage (11) constitué de l'air de balayage (10) et du gaz de combustion (6) est fabriqué dans le cylindre (3), un moyen d'élévation de pression (12, 121) étant prévu pour l'élévation de la pression d'air de suralimentation (P_{L}), et un volume d'air de balayage (V_{L}) réduit étant amené au cylindre (3) sous une pression d'air de suralimentation (P_{L}) élevée, **caractérisé en ce qu'**il est prévu un moyen de régulation, de sorte qu'un débit d'un réfrigérant est commandé et/ou régulé par un refroidisseur d'air de suralimentation (14), de telle sorte qu'une température d'allumage moyenne du mélange gazeux d'allumage n'est pas sensiblement modifiée par le moyen d'élévation de pression (12, 121).

2. Procédé selon la revendication 1, une section d'entrée (13) étant réduite par le moyen d'élévation de pression (12, 121), notamment par une bague de buse (121), sur un côté de turbine (91) du turbocompresseur à gaz d'échappement (9), de telle sorte qu'une vitesse du gaz de combustion (6) entrant dans le turbocompresseur à gaz d'échappement (9) est augmentée et/ou un espace intérieur d'un carter de turbine (911) est réduit sur le côté de turbine (91) du turbocompresseur à gaz d'échappement (9).

3. Procédé selon l'une quelconque des revendications 1 ou 2, le moyen d'élévation de pression (12) étant un turbocompresseur à gaz d'échappement, avec lequel la pression d'air de suralimentation (P_{L}) élevée est générée.

4. Procédé selon l'une quelconque des revendications précédentes, la soupape de sortie (7) étant activée, de telle sorte qu'une quantité de gaz d'échappement prédéfinie du gaz de combustion (6) reste dans le cylindre (3) après une fermeture de la soupape de sortie (7) et/ou une pression d'allumage et/ou pression de compression prédéfinie est réglée.

5. Procédé selon l'une quelconque des revendications précédentes, la pression d'air de suralimentation (P_{L}) et le volume d'air de balayage (V_{L}) étant prédéfinis, de telle sorte que la quantité d'air de balayage prédéfinie, en particulier une masse de la quantité d'air de balayage prédéfinie, n'est pas modifiée sensiblement par le moyen d'élévation de pression (12, 121).

6. Procédé selon l'une quelconque des revendications précédentes, la soupape de sortie (7) étant activée, de telle sorte qu'une température d'allumage moyenne du mélange gazeux d'allumage n'est pas sensiblement modifiée par le moyen d'élévation de pression (12, 121).

7. Procédé selon l'une quelconque des revendications précédentes, dans lequel un produit polluant est réduit dans le gaz de combustion (6), en particulier une charge de NOₓ est réduite.

8. Gros moteur diesel deux temps balayé dans la longueur, sur lequel des fentes de balayage (4) sont prévues sur une zone d'entrée (2) d'un cylindre (3) pour l'arrivée d'une quantité d'air de balayage prédéfinissable et une soupape de sortie (7) est prévue sur un couvercle de cylindre (5) du cylindre (3) pour l'éjection d'un gaz de combustion (6), de sorte qu'un air frais (8) mis à disposition sous une pression ambiante (P₀) peut être aspiré par un turbocompresseur à gaz d'échappement (9) et peut être amené par les fentes de balayage (4) au cylindre (3) sous forme d'air de balayage (10) sous une pression d'air de suralimentation (P_{L}) prédéfinissable, de sorte qu'un mélange gazeux d'allumage constitué de l'air de balayage (10) et du gaz de combustion (6) peut être fabriqué dans le cylindre (3), un moyen d'élévation de pression (12, 121) étant prévu pour l'élévation de la pression d'air de suralimentation (P_{L}), de sorte qu'un volume d'air de balayage (V_{L}) réduit peut être amené au cylindre (3) sous une pression d'air de suralimentation (P_{L}) élevée, **caractérisé en ce qu'**il est prévu un moyen de régulation, de sorte qu'un débit d'un réfrigérant peut être commandé et/ou réglé par un refroidisseur d'air de suralimentation (14), de telle sorte qu'une température d'allumage moyenne du mélange gazeux d'allumage n'est pas sensiblement modifiée par le moyen d'élévation de pression (12, 121).

9. Gros moteur diesel deux temps selon la revendication 8, le moyen d'élévation de pression (12, 121) étant une bague de buse (121), par laquelle une section d'entrée (13) est réduite sur un côté de turbine (91) du turbocompresseur à gaz d'échappement (9), de telle sorte qu'une vitesse du gaz de combustion (6) entrant dans le turbocompresseur à gaz d'échappement (9) est augmentée et/ou un espace intérieur d'un carter de turbine (911) sur le côté de turbine (91) du turbocompresseur à gaz d'échappement (9) est réduit.

10. Gros moteur diesel deux temps selon l'une quelconque des revendications 8 ou 9, le moyen d'élévation de pression (12, 121) étant un turbocompresseur à gaz d'échappement (9), qui génère dans l'état de service la pression d'air de suralimentation (P_{L}) élevée.

11. Gros moteur diesel deux temps selon l'une quelconque des revendications 8 à 10, le gros moteur diesel deux temps étant un moteur commandé de façon électronique, en particulier un moteur Wärtsilä RT-Flex ou un moteur MAN B&W ME, de sorte que l'angle d'ouverture et/ou l'angle de fermeture de la soupape de sortie (7) et/ou un moment d'injection et/ou une durée d'injection peut être réglé indépendamment de façon électronique et peut être de préférence actionné de façon hydraulique.
